# EUROPÄISCHE PATENTANMELDUNG

(11) **EP 4 813 677 A1**
(43) Veröffentlichungstag der Anmeldung: **30.09.2026**
(21) Anmeldenummer: 26159184.6
(22) Anmeldetag: 18.02.2026
(51) Int. Cl.: B60H 1/00, B60H 1/32

(54) **TEMPERIERSYSTEM FÜR EIN FAHRZEUG**

(30) Priorität: 27.03.2025 DE 102025111858
(71) Anmelder: Eberspächer Sütrak GmbH & Co. KG, 71272 Renningen (DE)
(72) Erfinder: Weinreuter, Tobias, Ilsfeld (DE)
(74) Vertreter: Ruttensperger Lachnit Trossin Gomoll

(57) **Zusammenfassung**

Ein Temperiersystem für ein Fahrzeug umfasst einen Heizkreislauf (12) mit einer Heizkreislauf-Vorlaufleitung (16) und einer Heizkreislauf-Rücklaufleitung (18), einen Kühlkreislauf (14) mit einer Kühlkreislauf-Vorlaufleitung (20) und einer Kühlkreislauf-Rücklaufleitung (22) und eine Mehrzahl von Temperiermodulen (24₁). Wenigstens zwei Temperiermodule (24₁) der Mehrzahl von Temperiermodulen (24₁), vorzugsweise alle Temperiermodule (24₁) der Mehrzahl von Temperiermodulen (24₁), umfassen jeweils eine mit der Heizkreislauf-Vorlaufleitung (16) verbundene oder zu verbindende erste Temperiermodul-Vorlaufleitung-Anschlussleitung (30) und eine mit der Heizkreislauf-Rücklaufleitung (18) verbundene oder zu verbindende erste Temperiermodul-Rücklaufleitung-Anschlussleitung (66), oder/und eine mit der Kühlkreislauf-Vorlaufleitung (20) verbundene oder zu verbindende zweite Temperiermodul-Vorlaufleitung-Anschlussleitung (32) und eine mit der Kühlkreislauf-Rücklaufleitung (22) verbundene oder zu verbindende zweite Temperiermodul-Rücklaufleitung-Anschlussleitung (70).

## Beschreibung

Die vorliegende Erfindung betrifft ein Temperiersystem für ein Fahrzeug, mit welchem die Möglichkeit besteht, verschiedene Systembereiche eines Fahrzeugs voneinander unabhängig thermisch zu konditionieren, und welches in einfacher Weise an verschiedene Einbauumgebungen angepasst werden kann.

Aus der WO 2011/479904A1 ist ein Temperiersystem für ein Fahrzeug bekannt, bei welchem die Möglichkeit besteht, verschiedene thermisch zu konditionierende Systembereiche eines Fahrzeugs, wie z. B. einen Fahrzeuginnenraum, eine Traktionsbatterie und dergleichen thermisch zu konditionieren. Dieses bekannte Temperiersystem umfasst einen eine Temperiermedium-Förderpumpe bereitstellenden Kompressor, durch welchen das ein Temperiermedium bereitstellende Kältemittel komprimiert und nachfolgend über verschiedene Leitungsbereiche verschiedenen Wärmetauschern, Ventilen, insbesondere einem Expansionsventil, zugeführt wird, um aus dem komprimierten Kältemittel Wärme abzuführen und diese zur Erwärmung eines oder mehrerer Systembereiche zu nutzen, andererseits in dem expandierten und dabei abgekühlten Kältemittel Wärme aufnehmen, um dadurch Systembereiche zu kühlen.

Es ist die Aufgabe der vorliegenden Erfindung, ein Temperiersystem vorzusehen, welches in einfacher Art und Weise an verschiedene Einbauumgebungen zur voneinander unabhängigen thermischen Konditionierung verschiedener Systembereiche angepasst werden kann.

Gemäß der vorliegenden Erfindung wird diese Aufgabe gelöst durch ein Temperiersystem für ein Fahrzeug, umfassend:
- einen Heizkreislauf mit einer Heizkreislauf-Vorlaufleitung und einer Heizkreislauf-Rücklaufleitung,
- einen Kühlkreislauf mit einer Kühlkreislauf-Vorlaufleitung und einer Kühlkreislauf-Rücklaufleitung,
- einer Mehrzahl von Temperiermodulen.

Wenigstens zwei Temperiermodule der Mehrzahl von Temperiermodulen, vorzugsweise alle Temperiermodule der Mehrzahl von Temperiermodulen, umfassen jeweils:
- eine mit der Heizkreislauf-Vorlaufleitung verbundene oder zu verbindende erste Temperiermodul-Vorlaufleitung-Anschlussleitung und eine mit der Heizkreislauf-Rücklaufleitung verbundene oder zu verbindende erste Temperiermodul-Rücklaufleitung-Anschlussleitung,
   oder/und
- eine mit der Kühlkreislauf-Vorlaufleitung verbundene oder zu verbindende zweite Temperiermodul-Vorlaufleitung-Anschlussleitung und eine mit der Kühlkreislauf-Rücklaufleitung verbundene oder zu verbindende zweite Temperiermodul-Rücklaufleitung-Anschlussleitung.

Durch die Bereitstellung derartiger Temperiermodule bzw. durch den modulartigen Aufbau des Temperiersystems besteht die Möglichkeit, je nach Bedarf und Ausgestaltung eines zur Aufnahme eines derartigen Temperiersystem vorgesehenen Fahrzeugs die Anzahl der in das Temperiersystem integrierten Temperiermodule zu variieren bzw. an den Bedarf bzw. die Ausgestaltung des Fahrzeugs anzupassen. Da die einzelnen Module eines derartigen Temperiersystems voneinander unabhängig betrieben werden, besteht zwischen diesen grundsätzlich keine strömungstechnische bzw. ansteuerungstechnische Wechselwirkung, so dass die Hinzunahme eines oder mehrerer zusätzlicher Temperiermodule bzw. das Weglassen einzelner Temperiermodule keine grundsätzliche Änderung an der Struktur des Temperiersystems bzw. bei der Integration anderer Temperiermodule erfordert. Da das im Heizkreislauf bzw. im Kühlkreislauf zirkulierende Temperiermedium ein herkömmliches, im Allgemeinen flüssiges Wärmeträgermedium, wie zum Beispiel Wasser oder dergleichen, umfasst, ist das Ankoppeln eines Temperiermoduls an einen derartigen Kreislauf deutlich einfacher realisierbar, als beispielsweise die Integration eines derartigen Temperiermoduls in einen Kältemittelkreislauf, in welchem ein in verschiedenen Bereichen des Kältemittelkreislaufs unterschiedliche Aggregatszustände aufweisendes Kältemittel zirkuliert.

Um ein Temperiermodul abhängig vom Wärmebedarf wahlweise an den Heizkreislauf oder den Kühlkreislauf Ankoppeln zu können, kann jedes der wenigstens zwei Temperiermodule, vorzugsweise jedes Temperiermodul, ein Vorlauf-Umschaltventil zum wahlweisen Verbinden einer Temperiermodul-Einlassleitung mit der ersten Temperiermodul-Vorlaufleitung-Anschlussleitung oder der zweiten Temperiermodul-Vorlaufleitung-Anschlussleitung umfassen.

Gleichermaßen kann zum definierten Leiten von aus einem Temperiermodul abgegebenem Temperiermedium in denjenigen Kreislauf von Heizkreislauf und Kühlkreislauf, aus welchem das Temperiermedium aufgenommen wurde, vorgesehen sein, dass jedes der wenigstens zwei Temperiermodule, vorzugsweise jedes Temperiermodul, ein Rücklauf-Umschaltventil zum wahlweisen Verbinden einer Temperiermodul-Auslassleitung mit der ersten Temperiermodul-Rücklaufleitung-Anschlussleitung oder der zweiten Temperiermodul-Rücklaufleitung-Anschlussleitung umfasst.

Um in den einzelnen Temperiermodulen unabhängig von anderen Temperiermodulen eine Strömung des Temperiermediums erzeugen zu können, kann jedes der wenigstens zwei Temperiermodule, vorzugsweise jedes Temperiermodul, eine Temperiermedium-Förderpumpe zum Fördern von über die erste Temperiermodul-Vorlaufleitung-Anschlussleitung oder die zweite Temperiermodul-Vorlaufleitung-Anschlussleitung aufgenommenem Temperiermedium umfassen.

Beispielsweise kann die Temperiermodul-Einlassleitung einen Auslassanschluss des Vorlauf-Umschaltventils mit der Temperiermedium-Förderpumpe verbinden.

Um Temperiermedium zu bzw. von einem jeweiligen thermisch zu konditionieren dem Systembereich leiten zu können, kann jedes der wenigstens zwei Temperiermodule, vorzugsweise jedes Temperiermodul, eine Temperiermedium-Zuführleitung zum Zuführen von Temperiermedium zu wenigstens einem thermisch zu konditionierenden Systembereich und eine Temperiermedium-Abführleitung zum Abführen von Temperiermedium von dem wenigstens einen thermisch zu konditionieren dem Systembereich umfassen.

Dabei kann beispielsweise vorgesehen sein, dass die Temperiermedium-Zuführleitung die Temperiermedium-Förderpumpe mit dem wenigstens einen thermisch zu konditionieren Systembereich verbindet.

Für eine in einem jeweiligen Temperiermodul individuell vorzunehmende definierte Einstellung der Temperatur des einem thermisch zu konditionierenden Systembereichs zugeführten Temperiermediums kann ein Bypass-Ventil zum wahlweisen Leiten wenigstens eines Teils des über die Temperiermedium-Abführleitung aus dem wenigstens einen thermisch zu konditionieren Systembereich abgeführten Temperiermediums zu der Temperiermedium-Zuführleitung vorgesehen sein.

Dabei kann für eine baulich einfach gestaltete Struktur eines derart aufgebauten Temperiermoduls vorgesehen sein, dass:
- die Temperiermedium-Abführleitung den wenigstens einen thermisch zu konditionierenden Systembereich mit einem Einlassanschluss des Bypass-Ventils verbindet,
- die Temperiermodul-Auslassleitung einen ersten Auslassanschluss des Bypass-Ventils mit einem Einlassanschluss des Rücklauf-Umschaltventils verbindet,
- eine Bypass-Leitung einen zweiten Auslassanschluss des Bypass-Ventils mit der Temperiermodul-Einlassleitung verbindet.

Eine weitere Möglichkeit, die Temperatur des Temperiermediums innerhalb eines Temperiermoduls einzustellen, kann vorsehen, dass in Zuordnung zu wenigstens einem Temperiermodul der wenigstens zwei Temperiermodule, vorzugsweise jedem Temperiermodul der wenigstens zwei Temperiermodule, eine Modulergänzung vorgesehen ist, wobei die Modulergänzung ein Abzweig-Ventil und wenigstens einen Wärmetauscher umfasst. Mit einem derartigen Wärmetauscher kann Wärme an die diesen umgebende Luft abgeführt oder bei vergleichsweise hoher Umgebungstemperatur aus dieser aufgenommen werden und dadurch die Temperatur des den wenigstens einen Wärmetauscher durchströmenden Temperiermediums beeinflusst werden.

Für die Integration einer derartigen Modulergänzung in ein Temperiermodul wird vorgeschlagen, dass:
- ein erster Leitungsabschnitt der Temperiermedium-Abführleitung mit einem Eingangsanschluss des Abzweig-Ventils verbunden ist,
- ein zweiter Leitungsabschnitt der Temperiermedium-Abführleitung mit einem ersten Ausgangsanschluss des Abzweig-Ventils verbunden ist,
- ein erster Leitungsabschnitt einer Abzweig-Leitung einen zweiten Ausgangsanschluss des Abzweig-Ventils mit dem wenigstens einen Wärmetauscher verbindet,
- ein zweiter Leitungsabschnitt der Abzweig-Leitung den wenigstens einen Wärmetauscher mit dem zweiten Leitungsabschnitt der Temperiermedium-Abführleitung verbindet.

Dabei kann beispielsweise der zweite Leitungsabschnitt der Temperiermedium-Abführleitung den ersten Ausgangsanschluss des Abzweig-Ventils mit dem Eingangsanschluss des Bypass-Ventils verbinden.

Eine einfache Gesamtstruktur des erfindungsgemäßen Temperiersystems kann erreicht werden, wenn die wenigstens zwei Temperiermodule, vorzugsweise alle Temperiermodule, gleich aufgebaut sind. Dies bedeutet, dass derart zueinander gleich gestaltete Temperiermodule im Wesentlichen die gleichen Funktionskomponenten enthalten, die aber nicht notwendigerweise in gleicher räumlicher Beziehung zueinander angeordnet sein müssen bzw. zueinander identisch dimensioniert sein müssen. Ein gleicher Aufbau der Temperiermodule bedeutet primär, dass diese durch den Aufbau mit zueinander hinsichtlich ihrer Funktion gleichen Komponenten in ansteuerungstechnischer Hinsicht und auch zur Anbindung an den Heizkreislauf bzw. den Kühlkreislauf gleich behandelt werden können.

Um die für zu erwärmende Systembereiche erforderliche Wärme bereitstellen zu können, kann der Heizkreislauf wenigstens eine Wärmequelle, vorzugsweise Heizbereich einer Wärmepumpe oder/und elektrisch betriebener Heizer oder/und brennstoffbetriebener Heizer, umfassen. Gleichermaßen kann zum Abführen von Wärme aus zu kühlenden Systembereichen der Kühlkreislauf wenigstens eine Wärmesenke, vorzugsweise Kühlbereich einer Wärmepumpe, umfassen.

Der wenigstens eine thermisch zu konditionierende Systembereich kann beispielsweise umfassen:
- eine Batterie,
- wenigstens eine Antriebsstrangkomponente,
- ein Antriebsaggregat,
- einen Fahrzeuginnenraum.

Es ist in diesem Zusammenhang darauf hinzuweisen, dass selbstverständlich in Zuordnung zu verschiedenen Temperiermodulen auch verschiedene thermisch zu konditionieren des Systembereiche vorgesehen sein können, so dass diese entsprechend dem jeweiligen Heiz bzw. Kühlbedarf voneinander unabhängig temperiert werden können.

Die Erfindung betrifft ferner ein Fahrzeug, insbesondere Omnibus, umfassend ein erfindungsgemäß aufgebautes Temperiersystem.

Die vorliegende Erfindung wird nachfolgend mit Bezug auf die beiliegenden Figuren detailliert beschrieben. Es zeigt:
- Fig. 1: in prinzipartiger Darstellung ein Temperiersystem für ein Fahrzeug mit mehreren Temperiermodulen;
- Fig. 2: ein Temperiermodul des Temperiersystems der Fig. 1.

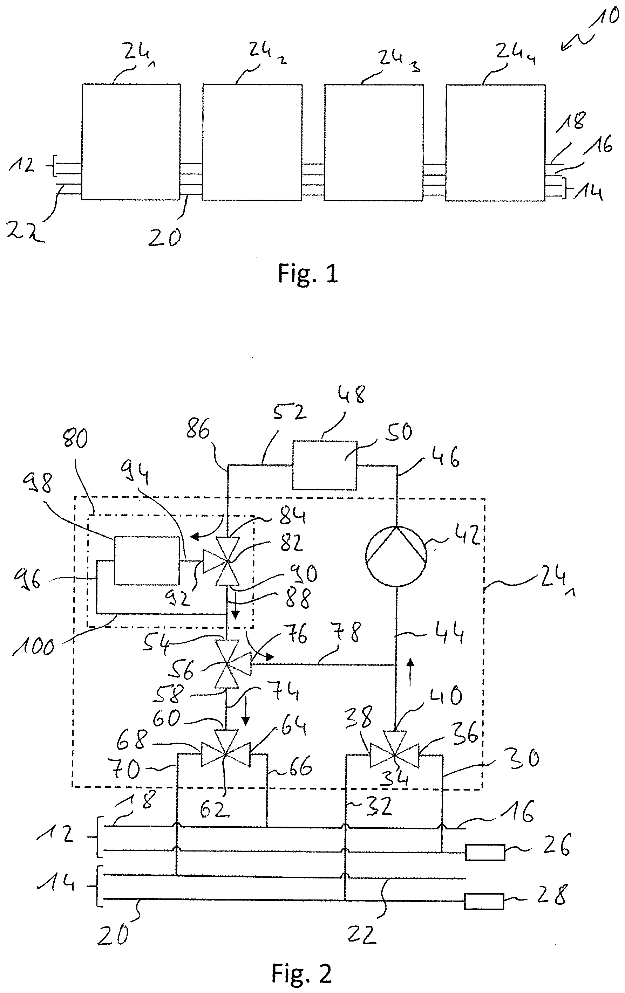

In Fig. 1 ist ein beispielsweise zur thermischen Konditionierung eines Omnibusses einsetzbares Temperiersystem allgemein mit 10 bezeichnet. Das Temperiersystem 10 umfasst einen Heizkreislauf 12 und einen Kühlkreislauf 14. Der Heizkreislauf 12 weist eine Heizkreislauf-Vorlaufleitung 16 und eine Heizkreislauf-Rücklaufleitung 18 auf. Gleichermaßen weist der Kühlreislauf 14 eine Kühlreislauf-Vorlaufleitung 20 und eine Kühlkreislauf-Rücklaufleitung 22 auf.

Im Heizkreislauf 12 zirkuliert ein beispielsweise flüssiges Temperiermedium, beispielsweise Wasser oder dergleichen, welches an einer Wärmequelle, wie z. B. dem Warmbereich einer Wärmepumpe, also dem Kondensator-Wärmetauscher eines Kältemittelkreislaufs, einem elektrisch oder mit Brennstoff betriebenem Heizer oder dergleichen, erwärmt werden kann. Im Kühlkreislauf 14 zirkuliert ein beispielsweise ebenfalls flüssiges Temperiermedium, beispielsweise Wasser, welches an einer Wärmesenke, beispielsweise dem Kühlbereich einer Wärmepumpe, also dem Bereich eines Verdampfer-Wärmetauschers eines Kältemittelkreislaufs, gekühlt werden kann.

Das Temperiersystem 10 umfasst eine Mehrzahl von Temperiermodulen 24₁, 24₂, 24₃, 24₄, die zumindest in ihrer Grundstruktur zueinander gleich bzw. im Wesentlichen identisch aufgebaut sein können und durch thermische Wechselwirkung mit dem Heizkreislauf 12 bzw. dem darin zirkulierenden Temperiermedium oder dem Kühlkreislauf 14 bzw. dem darin zirkulierenden Temperiermedium zur thermischen Konditionierung jeweils zumindest eines thermisch zu konditionierenden Systembereichs des Fahrzeugs genutzt werden können.

Der Aufbau eines derartigen Temperiermoduls wird beispielhaft anhand des in Fig. 2 dargestellten Temperiermoduls 24₁ erläutert. Jedes der anderen Temperiermodule 24₂, 24₃, 24₄ kann insbesondere hinsichtlich seiner Grundstruktur zum Temperiermodul 24₁ im Wesentlichen gleich aufgebaut sein.

Die Fig. 2 zeigt auch den Heizkreislauf 12 mit einer diesem zugeordneten Wärmequelle 26. Es ist darauf hinzuweisen, dass dem Heizkreislauf 24 mehrere beispielsweise auch in verschiedenen Prozessen Wärme bereitstellende Wärmequellen 26 zugeordnet sein können. Das durch eine Heizkreislauf-Zirkulationspumpe im Heizkreislauf 12 zirkulierte Temperiermedium wird durch die wenigstens eine Wärmequelle 26 erwärmt in die Heizkreislauf-Vorlaufleitung 16 eingespeist und wird mit gesenkter Temperatur zu der wenigstens einen Wärmequelle 26 über die Heizkreislauf-Rücklaufleitung 28 zurückgeleitet.

Die Fig. 2 zeigt auch den Kühlkreislauf 14 mit einer diesem zugeordneten Wärmesenke 28, aus welcher gekühltes bzw. kaltes Temperiermedium durch eine Kühlkreislauf-Zirkulationspumpe in die Kühlkreislauf-Vorlaufleitung 20 abgegeben wird. Auch dem Kühlkreislauf 14 können mehrere derartige Wärmesenken 28 zugeordnet sein. Das im Kühlkreislauf 14 zirkulierende Temperiermedium strömt über die Kühlkreislauf-Rücklaufleitung 22 zu der wenigstens einen Wärmesenke 28 zurück.

Das Temperiermodul 24 weist zur Aufnahme von Temperiermedium aus dem Heizkreislauf 12 eine erste Temperiermodul-Vorlaufleitung-Anschlussleitung 30 auf, und weist zur Ankopplung an die Kühlkreislauf-Vorlaufleitung 28 eine zweite Temperiermodul-Vorlaufleitung-Anschlussleitung 32 auf. Um wahlweise aus dem Heizkreislauf 12 oder dem Kühlkreislauf 14 erwärmtes bzw. gekühltes Temperiermedium aufnehmen bzw. in das Temperiermodul 24₁ einspeisen zu können, ist ein Vorlauf-Umschaltventil 34 vorgesehen. Die erste Temperiermodul-Vorlaufleitung-Anschlussleitung 30 verbindet die Heizkreislauf-Vorlaufleitung 16 mit einem ersten Einlassanschluss 36 des Vorlauf-Umschaltventils 34. Gleichermaßen verbindet die zweite Temperiermodul-Vorlaufleitung-Anschlussleitung 32 die Kühlkreislauf-Vorlaufleitung 20 mit einem zweiten Einlassanschluss 38 des Vorlauf-Umschaltventils 34.

An einen Auslassanschluss 40 des Vorlauf-Umschaltventils 34 schließt eine zu einer Temperiermedium-Förderpumpe 42 führende Temperiermodul-Einlassleitung 44 an. Durch die Temperiermedium-Förderpumpe 42 kann in dem Temperiermodul 24₁ das in dieser aufgenommene bzw. aufzunehmende Temperiermedium unabhängig von den Druckverhältnissen im Heizkreislauf 12 bzw. Kühlkreislauf 14 durch das Temperiermodul 24₁ hindurch gefördert bzw., wie nachfolgend beschrieben, in diesem zirkuliert werden.

Das von der Temperiermedium-Förderpumpe 42 abgegebene Temperiermedium strömt über eine Temperiermedium-Zuführleitung 46 zu einem in Zuordnung zu dem Temperiermodul 24₁ vorgesehenen thermisch zu konditionierenden Systembereich 48. Zur Übertragung von Wärme auf den thermisch zu konditionierenden Systembereich 48 bzw. zur Aufnahme von Wärme aus dem thermisch zu konditionierenden Systembereich 40 ist ein Wärmetauscher 50 vorgesehen. Der Wärmetauscher 50 kann beispielsweise einen Bestandteil des Temperiermoduls 24₁ bilden, in dieses also baulich integriert sein, oder kann einen Bestandteil des thermisch zu konditionierenden Systembereichs 48 bilden und über entsprechende Anschlussbereiche mit dem Temperiermodul 24₁ gekoppelt werden.

Das Temperiermedium verlässt den thermisch zu konditionierenden Systembereich 48 bzw. den Wärmetauscher 50 über eine Temperiermedium-Abführleitung 52 und strömt über diese zu einem Einlassanschluss 54 eines Bypass-Ventils 56. Ein erster Auslassanschluss 58 des Bypass-Ventils 56 ist über eine Temperiermedium-Auslassleitung 74 in Verbindung mit einem Einlassanschluss 60 eines allgemein mit 62 bezeichneten Rücklauf-Umschaltventils. Ein erster Auslassanschluss 64 des Rücklauf-Umschaltventils 64 ist über eine erste Temperiermodul-Rücklaufleitung-Anschlussleitung 66 in Verbindung mit der Heizkreislauf-Rücklaufleitung 18. Ein zweiter Auslassanschluss 68 des Rücklauf-Umschaltventils 62 ist über eine zweite Termperiermodul-Rücklauf-Anschlussleitung 70 in Verbindung mit der Kühlkreislauf-Rücklaufleitung 22.

Soll der thermisch zu konditionierende Systembereich 48 vermittels des Temperiermoduls 24₁ erwärmt werden, wird das Temperiermodul 24₁ mit dem Heizkreislauf 12 gekoppelt. Dafür wird das Vorlauf-Umschaltventil 34 so gestellt, dass eine Verbindung zwischen dem ersten Eingangsanschluss 36 und dem Ausgangsanschluss 40 desselben besteht, während keine Verbindung zwischen dem zweiten Eingangsanschluss 38 und dem Ausgangsanschluss 40 desselben besteht. Dadurch wird eine Strömungsverbindung zwischen der ersten Temperiermodul-Vorlauf-Anschlussleitung 30 und der Temperiermodul-Einlassleitung 44 erzeugt. Gleichzeitig wird das Rücklauf-Umschaltventil 62 derart gestellt, dass eine Verbindung zwischen dem Einlassanschluss 60 und dem ersten Auslassanschluss 64 desselben besteht, während der zweite Auslassanschluss 68 abgesperrt ist, so dass eine Strömungsverbindung zwischen der Temperiermodul-Auslassleitung 74 und der ersten Temperiermodul-Rücklauf-Anschlussleitung 66 besteht. Somit kann aus dem Heizkreislauf 12 in dem Temperiermodul 24₁ aufgenommenes Temperiermedium wieder in den Heizkreislauf 12 zurückgespeist werden.

Soll vermittels des Temperiermoduls 24₁ der thermisch zu konditionierende Systembereich 48 gekühlt werden, wird das Vorlauf-Umschaltventil 34 derart geschaltet, dass dieses eine Strömungsverbindung zwischen dem Auslassanschluss 40 und dem zweiten Einlassanschluss 38 desselben und damit eine Strömungsverbindung zwischen der Temperiermodul-Einlassleitung 44 und der zweiten Temperiermodul-Vorlaufleitung-Anschlussleitung 32 herstellt. Gleichzeitig wird in diesem Zustand das Rücklauf-Umschaltventil 62 derart geschaltet, dass dieses eine Strömungsverbindung zwischen seinem Einlassanschluss 60 und seinem zweiten Auslassanschluss 70 und damit eine Strömungsverbindung zwischen der Temperiermodul-Auslassleitung 74 und der Kühlkreislauf-Rücklaufleitung 22 herstellt. In diesem Zustand kann das aus der Kühlkreislauf-Vorlaufleitung 20 aufgenommene Temperiermedium wieder in den Kühlkreislauf 14 bzw. die Kühlkreislauf-Rücklaufleitung 22 desselben zurückgespeist werden.

Das Temperiermodul 24₁ umfasst ferner eine an einen zweiten Ausgangsanschluss 76 des Bypass-Ventils 56 angeschlossene Bypass-Leitung 78. Diese verbindet den zweiten Ausgangsanschluss 76 des Bypass-Ventils 56 mit der Temperiermodul-Einlassleitung 44. Abhängig von der Stellung des Bypass-Ventils 56 besteht somit die Möglichkeit, das gesamte oder einen Teil des durch die Temperiermedium-Förderpumpe 42 geförderten Temperiermediums im Temperiermodul 24₁ zu zirkulieren, so dass das Temperiermodul 24₁ zumindest zeitweise auch abgekoppelt vom Heizkreislauf 12 und vom Kühlkreislauf 14 betrieben werden kann, um die gewünschte Temperatur in dem thermisch zu konditionierenden Systembereich 48 einzustellen. Ist das Bypass-Ventil 56 derart gestellt, dass ein Teil des über die Temperiermedium-Abführleitung 52 in diesem aufgenommenen Temperiermediums über das Rücklauf-Umschaltventil 62 wieder in den Heizkreislauf 12 oder den Kühlkreislauf 14 zurückgespeist wird, während der verbleibende Teil in Richtung zur Bypass-Leitung 78 und damit auch in Richtung zur Temperiermodul-Einlassleitung 44 geleitet wird, entsteht in der Temperiermodul-Einlassleitung 44 ein Gemisch aus über das Vorlauf-Umschaltventil 34 aufgenommenem Temperiermedium und im Temperiermodul 24₁ zirkulierendem Temperiermedium, wodurch die Temperatur des von der Temperiermedium-Förderpumpe 42 abgegebenen Temperiermediums entsprechend dem Temperierbedarf eingestellt werden kann.

Das Temperiermodul 24 umfasst im dargestellten Ausgestaltungsbeispiel eine allgemein mit 80 bezeichnete Modulergänzung. Die Modulergänzung 80 kann als fester Bestandteil in das Temperiermodul 24₁ integriert sein oder kann als weitere modulartige Baugruppe wahlweise an das Temperiermodul 24 angebaut werden.

Die Modulergänzung 80 umfasst ein in die Temperiermedium-Abführleitung 52 integriertes Abzweig-Ventil 82. Ein Einlassanschluss 84 des Abzweig-Ventils 82 ist über einen ersten Leitungsabschnitt 86 der Temperiermedium-Abführleitung 52 in Verbindung mit dem thermisch zu konditionierenden Systembereich 48 bzw. dem Wärmetauscher 50. Über einen zweiten Leitungsabschnitt 88 der Temperiermedium-Abführleitung 52 ist ein erster Auslassanschluss 90 des Abzweig-Ventils 82 in Verbindung mit dem Einlassanschluss 54 des Bypass-Ventils 56.

Ein zweiter Auslassanschluss 92 des Abzweigventils 82 ist über einen ersten Leitungsabschnitt 94 einer Abzweig-Leitung 96 in Verbindung mit einem Wärmetauscher 98. Der Wärmetauscher 98 ist über einen zweiten Leitungsabschnitt 100 der Abzweig-Leitung 96 an den zweiten Leitungsabschnitt 88 der Temperiermedium-Abführleitung 52 angekoppelt.

Je nach Stellung des Abzweig-Ventils 82 kann das über die Temperiermedium-Abführleitung 52 aus dem thermisch zu konditionierenden Systembereich 48 bzw. dem Wärmetauscher 50 abgegebene Temperiermedium wahlweise in den Wärmetauscher 98 geleitet werden oder direkt in Richtung zum Bypass-Ventil 56 geleitet werden, oder kann ein Teil des den ersten Leitungsabschnitt 86 der Temperiermedium-Abführleitung 52 durchströmenden Temperiermediums in Richtung zum Wärmetauscher 98 geleitet werden, während der verbleibende Teil in Richtung zum Bypassventil 56 geleitet werden kann.

Durch das wahlweise Leiten zumindest einen Teils des Temperiermediums durch den Wärmetauscher 98 besteht die Möglichkeit, einen Einfluss auf dessen Temperatur zu nehmen. Beispielsweise kann das Temperiermedium am Wärmetauscher 98 Wärme auf die diesen umgebende Luft übertragen und somit gekühlt in Richtung zum Bypass-Ventil 56 strömen, oder kann bei vergleichsweise hoher Umgebungstemperatur Wärme aufnehmen und somit erwärmt in Richtung zum Bypass-Ventil 56 strömen. Dieses kann dann, wie vorangehend beschrieben, je nach Bedarf an thermischer Konditionierung das in diese einströmende Temperiermedium zumindest zum Teil wieder zurück in Richtung zu der Temperiermodul-Einlassleitung 44 leiten.

Durch die Möglichkeit, zumindest einen Teil des das Temperiermodul 24₁ durchströmenden Temperiermediums am Wärmetauscher 98 zu erwärmen oder zu kühlen und zumindest einen Teil des im Bypass-Ventil 56 aufgenommenen Temperiermediums über die Bypassleitung 78 zur Temperiermodul-Einlassleitung 44 und über diese in Richtung zu dem thermisch zu konditionierenden Systembereich 48 leiten zu können, besteht die Möglichkeit, eine exakte Temperaturregelung im Bereich des thermisch zu konditionierenden Systembereichs 48 zu erreichen. Dazu kann durch einen oder mehrere Temperatursensoren die Temperatur im Bereich des thermisch zu konditionierenden Systembereichs 48 erfasst werden, und unter Berücksichtigung dieser Temperatur können die unter der Ansteuerung einer Ansteuereinheit stehenden Systembereiche, also im Wesentlichen das Vorlauf-Umschaltventil 34, die Temperiermedium-Förderpumpe 42, das Abzweigventil 82, das Bypass-Ventil 56 und das Rücklauf-Umschaltventil 62, so gestellt werden, dass die Temperatur des über die Temperiermedium-Zuführleitung 46 zum Wärmetauscher 50 geleiteten Temperiermediums so eingestellt wird, dass der thermisch zu konditionierende Systembereich 48 schnell auf die für diesen vorgesehene Temperatur gebracht wird bzw. bei dieser Temperatur gehalten wird.

Da es hierzu möglich ist, das Temperiermodul 24₁ zumindest teilweise vom Heizkreislauf 12 und vom Kühlkreislauf 14 zu entkoppeln, ist ein effizienter Betrieb zum Heizen oder Kühlen des thermisch zu temperierenden Systembereichs 48 erreichbar, wobei jedes derart aufgebaute Temperiermodul unabhängig von anderen in das Temperiersystem 10 integrierten Temperiermodulen betrieben werden kann. In Verbindung mit jedem der Temperiermodule 24₁, 24₂, 24₃, 24₄ besteht somit die Möglichkeit, den jeweils zugeordneten thermisch zu konditionierenden Systembereich optimal und unabhängig vom Betrieb in den jeweils anderen Temperiermodulen auf die vorgesehene Temperatur zu bringen bzw. bei dieser zu halten.

Der modulartige Aufbau des Temperiersystems gestattet nicht nur die thermische Konditionierung verschiedener Systembereiche im Wesentlichen unabhängig voneinander, sondern ermöglicht auch in einfacher Art und Weise die Anpassung des gesamten Temperiersystems an verschiedene Einbauumgebungen. Beispielsweise kann, je nach Größe oder Bauart eines das Temperiersystem aufzunehmenden Fahrzeugs, beispielsweise Omnibus, die Anzahl der Temperiermodule variiert werden. So kann beispielsweise bei einem elektrisch betriebenen Fahrzeug ein Temperiermodul vorgesehen sein, um eine Traktionsbatterie thermisch zu konditionieren, also betriebszustandsabhängig zu erwärmen oder zu kühlen, während ein derartiges Temperiermodul bei einem mit einem Brennstoff-Antriebsaggregat ausgebildeten Fahrzeug nicht vorhanden ist.

Die Integration verschiedener Anzahlen an derartigen Temperiermodulen in das Temperiersystem beeinflusst jedoch nicht die Grundstruktur der in Zuordnung zu den verschiedenen zu erwärmenden bzw. zu kühlenden Systembereichen eines Fahrzeugs vorgesehenen Temperiermodule selbst. All diese Temperiermodule können beispielsweise die gleiche Grundstruktur mit der Temperiermedium-Förderpumpe und der Möglichkeit, diese an den Heizkreislauf oder den Kühlkreislauf anzukoppeln, aufgebaut sein. Besteht für einen thermisch zu konditionieren Systembereich die Notwendigkeit, diesen wahlweise erwärmen oder kühlen zu müssen, kann bei einem dafür vorgesehenen Temperiermodul durch Einsatz der Umschaltventile dafür gesorgt werden, dass dieses wahlweise mit dem Heizkreislauf und dem Kühlkreislauf gekoppelt werden kann. Besteht die Notwendigkeit, eine feinfühlige, exakte Temperatureinstellung für den thermisch zu konditionierenden Systembereich erreichen zu müssen, kann durch Bereitstellen der Modulergänzung in Zuordnung zu einem Temperiermodul oder/und durch Bereitstellen eines eine modulinterne Temperiermediumzirkulation ermöglichenden Bypass-Ventils dafür gesorgt werden, dass Temperiermediumströme unterschiedlicher Temperaturen gemischt werden, um somit exakt die Temperatur des Temperaturmediums bereitstellen zu können, welche für die erforderliche thermische Konditionierung erforderlich bzw. vorteilhaft ist. Dies bedeutet, dass bei derartigen Temperiermodulen die Modulergänzung, das Bypass-Ventil und die diesem zugeordnete Bypass-Leitung sowie die beiden Umschaltventile als optionale Baugruppen betrachtet werden können, die, je nach Bedarf bzw. Bauart des thermisch zu konditionierenden Systembereichs, in beliebiger Kombination in einem derartigen Modul vorgesehen sein können.

Selbstverständlich können, abhängig vom jeweiligen Einsatzzweck die verschiedenen Komponenten derartiger Temperiermodule zueinander unterschiedlich angeordnet sein bzw. auch verschieden dimensioniert sein. Beispielsweise kann bei den einzelnen Modulen die Größe der Temperiermedium-Förderpumpe abhängig von der Menge des zur thermischen Konditionierung eines jeweils zugeordneten Systembereichs erforderlichen Temperiermediums ausgewählt werden. Auch dies trägt dazu bei, in einem Fahrzeug, wie z. B. einem Omnibus, verschiedene thermisch zu konditionierende Systembereiche auf unterschiedlichen Temperaturniveaus betreiben zu können und in Verbindung mit jedem dieser thermisch zu konditionierenden Systembereiche den in Zuordnung zu diesen vorgesehenen Temperiermodulen den effizientesten Betrieb durch entsprechende Ansteuerung der verschiedenen Ventile zu gewährleisten.

## Patentansprüche

1. Temperiersystem für ein Fahrzeug, umfassend:
- einen Heizkreislauf (12) mit einer Heizkreislauf-Vorlaufleitung (16) und einer Heizkreislauf-Rücklaufleitung (18),
- einen Kühlkreislauf (14) mit einer Kühlkreislauf-Vorlaufleitung (20) und einer Kühlkreislauf-Rücklaufleitung (22),
- eine Mehrzahl von Temperiermodulen (24₁, 24₂, 24₃, 24₄),
wobei wenigstens zwei Temperiermodule (24₁, 24₂, 24₃, 24₄) der Mehrzahl von Temperiermodulen (24₁, 24₂, 24₃, 24₄), vorzugsweise alle Temperiermodule (24₁, 24₂, 24₃, 24₄) der Mehrzahl von Temperiermodulen (24₁, 24₂, 24₃, 24₄), jeweils umfassen:
- eine mit der Heizkreislauf-Vorlaufleitung (16) verbundene oder zu verbindende erste Temperiermodul-Vorlaufleitung-Anschlussleitung (30) und eine mit der Heizkreislauf-Rücklaufleitung (18) verbundene oder zu verbindende erste Temperiermodul-Rücklaufleitung-Anschlussleitung (66), oder/und
- eine mit der Kühlkreislauf-Vorlaufleitung (20) verbundene oder zu verbindende zweite Temperiermodul-Vorlaufleitung-Anschlussleitung (32) und eine mit der Kühlkreislauf-Rücklaufleitung (22) verbundene oder zu verbindende zweite Temperiermodul-Rücklaufleitung-Anschlussleitung (70).

2. Temperiersystem nach Anspruch 1,
**dadurch gekennzeichnet, dass** jedes der wenigstens zwei Temperiermodule (24₁, 24₂, 24₃, 24₄), vorzugsweise jedes Temperiermodul (24₁, 24₂, 24₃, 24₄), ein Vorlauf-Umschaltventil (34) zum wahlweisen Verbinden einer Temperiermodul-Einlassleitung (44) mit der ersten Temperiermodul-Vorlaufleitung-Anschlussleitung (30) oder der zweiten Temperiermodul-Vorlaufleitung-Anschlussleitung (32) umfasst.

3. Temperiersystem nach Anspruch 1 oder 2,
**dadurch gekennzeichnet, dass** jedes der wenigstens zwei Temperiermodule (24₁, 24₂, 24₃, 24₄), vorzugsweise jedes Temperiermodul (24₁, 24₂, 24₃, 24₄), ein Rücklauf-Umschaltventil (62) zum wahlweisen Verbinden einer Temperiermodul-Auslassleitung (74) mit der ersten Temperiermodul-Rücklaufleitung-Anschlussleitung (66) oder der zweiten Temperiermodul-Rücklaufleitung-Anschlussleitung (70) umfasst.

4. Temperiersystem nach einem der Ansprüche 1-3,
**dadurch gekennzeichnet, dass** jedes der wenigstens zwei Temperiermodule (24₁, 24₂, 24₃, 24₄), vorzugsweise jedes Temperiermodul (24₁, 24₂, 24₃, 24₄), eine Temperiermedium-Förderpumpe (42) umfasst zum Fördern von über die erste Temperiermodul-Vorlaufleitung-Anschlussleitung (30) oder die zweite Temperiermodul-Vorlaufleitung-Anschlussleitung (32) aufgenommenem Temperiermedium.

5. Temperiersystem nach Anspruch 2 und Anspruch 4,
**dadurch gekennzeichnet, dass** die Temperiermodul-Einlassleitung (44) einen Auslassanschluss (40) des Vorlauf-Umschaltventils (34) mit der Temperiermedium-Förderpumpe (42) verbindet.

6. Temperiersystem nach einem der Ansprüche 1-5,
**dadurch gekennzeichnet, dass** jedes der wenigstens zwei Temperiermodule (24₁, 24₂, 24₃, 24₄), vorzugsweise jedes Temperiermodul (24₁, 24₂, 24₃, 24₄), eine Temperiermedium-Zuführleitung (46) zum Zuführen von Temperiermedium zu wenigstens einem thermisch zu konditionierenden Systembereich (48) und eine Temperiermedium-Abführleitung (52) zum Abführen von Temperiermedium von dem wenigstens einen thermisch zu konditionieren dem Systembereich (48) umfasst.

7. Temperiersystem nach 4 und Anspruch 6,
**dadurch gekennzeichnet, dass** die Temperiermedium-Zuführleitung (46) die Temperiermedium-Förderpumpe (42) mit dem wenigstens einen thermisch zu konditionieren Systembereich (48) verbindet.

8. Temperiersystem nach Anspruch 6 oder 7,
**dadurch gekennzeichnet, dass** ein Bypass-Ventil (56) zum wahlweisen Leiten wenigstens eines Teils des über die Temperiermedium-Abführleitung (52) aus dem wenigstens einen thermisch zu konditionieren Systembereich (48) abgeführten Temperiermediums zu der Temperiermedium-Zuführleitung (44) vorgesehen ist.

9. Temperiersystem nach Anspruch 2 und Anspruch 3 und Anspruch 8,
**dadurch gekennzeichnet, dass**:
- die Temperiermedium-Abführleitung (52) den wenigstens einen thermisch zu konditionierenden Systembereich (48) mit einem Einlassanschluss (60) des Bypass-Ventils (56) verbindet,
- die Temperiermodul-Auslassleitung (74) einen ersten Auslassanschluss (58) des Bypass-Ventils (56) mit einem Einlassanschluss (60) des Rücklauf-Umschaltventils (62) verbindet,
- eine Bypass-Leitung (78) einen zweiten Auslassanschluss (76) des Bypass-Ventils (56) mit der Temperiermodul-Einlassleitung (44) verbindet.

10. Temperiersystem nach einem der Ansprüche 1-9,
**dadurch gekennzeichnet, dass** in Zuordnung zu wenigstens einem Temperiermodul (24₁, 24₂, 24₃, 24₄) der wenigstens zwei Temperiermodule (24₁, 24₂, 24₃, 24₄), vorzugsweise jedem Temperiermodul (24₁, 24₂, 24₃, 24₄) der wenigstens zwei Temperiermodule (24₁, 24₂, 24₃, 24₄), eine Modulergänzung (80) vorgesehen ist, wobei die Modulergänzung (80) ein Abzweig-Ventil (82) und wenigstens einen Wärmetauscher 98) umfasst.

11. Temperiersystem nach Anspruch 6 und Anspruch 10,
**dadurch gekennzeichnet, dass**:
- ein erster Leitungsabschnitt (86) der Temperiermedium-Abführleitung (52) mit einem Eingangsanschluss (84) des Abzweig-Ventils (82) verbunden ist,
- ein zweiter Leitungsabschnitt (88) der Temperiermedium-Abführleitung (52) mit einem ersten Ausgangsanschluss (90) des Abzweig-Ventils (82) verbunden ist,
- ein erster Leitungsabschnitt (94) einer Abzweig-Leitung (96) einen zweiten Ausgangsanschluss (92) des Abzweig-Ventils (82) mit dem wenigstens einen Wärmetauscher (98) verbindet,
- ein zweiter Leitungsabschnitt (100) der Abzweig-Leitung (96) den wenigstens einen Wärmetauscher (98) mit dem zweiten Leitungsabschnitt (88) der Temperiermedium-Abführleitung (52) verbindet.

12. Temperiersystem nach Anspruch 9 und Anspruch 11,
**dadurch gekennzeichnet, dass** der zweite Leitungsabschnitt (88) der Temperiermedium-Abführleitung (52) den ersten Ausgangsanschluss (90) des Abzweig-Ventils (82) mit dem Eingangsanschluss (54) des Bypass-Ventils (56) verbindet.

13. Temperiersystem nach einem der Ansprüche 1-12,
**dadurch gekennzeichnet, dass** die wenigstens zwei Temperiermodule (24₁, 24₂, 24₃, 24₄), vorzugsweise alle Temperiermodule (24₁, 24₂, 24₃, 24₄), gleich aufgebaut sind.

14. Temperiersystem nach einem der Ansprüche 1-13,
**dadurch gekennzeichnet, dass** der Heizkreislauf (12) wenigstens eine Wärmequelle (26), vorzugsweise Heizbereich einer Wärmepumpe oder/und elektrisch betriebener Heizer oder/und brennstoffbetriebener Heizer, umfasst, oder/und dass der Kühlkreislauf (14) wenigstens eine Wärmesenke (28), vorzugsweise Kühlbereich einer Wärmepumpe, umfasst.

15. Temperiersystem nach Anspruch 6 oder einem der Ansprüche 7-14, sofern auf Anspruch 6 rückbezogen,
**dadurch gekennzeichnet, dass** der wenigstens eine thermisch zu konditionierende Systembereich (48) umfasst:
- eine Batterie,
- wenigstens eine Antriebsstrangkomponente,
- ein Antriebsaggregat,
- einen Fahrzeuginnenraum.

16. Fahrzeug, insbesondere Omnibus, umfassend ein Temperiersystem (10) nach einem der Ansprüche 1-15.
